# EUROPEAN PATENT SPECIFICATION

(11) **EP 0 424 995 B1**
(45) Date of publication and mention of the grant of the patent: **20.03.1996**
(21) Application number: 90125825.1
(22) Date of filing: 11.04.1986
(51) Int. Cl.: H04N 5/262

(54) **A recirculating special effects video framestore**
Bildwiederholspeicher für Spezialeffekte
Mémoire d'image vidéo à recirculation pour effets spéciaux

(30) Priority: 12.04.1985 US 722532
(43) Date of publication of application: 02.05.1991
(62) Divisional of application: 86902694.8
(73) Proprietor: AMPEX SYSTEMS CORPORATION, Redwood City, California 94063-3199 (US)
(72) Inventor: Bloomfield, John F., San Francisco, California (US); Trytko, David E., Foster City, California 94404 (US)
(74) Representative: Horton, Andrew Robert Grant

(56) References cited:
- US-A- 4 233 631
- US-A- 4 249 212
- NEC RESEARCH AND DEVELOPMENT, no. 56, January 1980, pages 130-134, Tokyo, JP;M. INABA et al.: "Digital video effects"

## Description

This invention relates generally to the recirculation of video data through a video framestore to create a variety of special effects. This invention further relates to the combining of new video data with recirculating video data, on a frame or alternate field interpolation basis. This invention further relates to the use of a recirculating frame store in a video combiner system.

### BACKGROUND OF THE INVENTION

Framestores have been used in the video industry for many years. A framestore is a memory device that can store one complete frame of video data. Framestores are commonly digital. Digital framestores allow manipulation of stored video data. Digital framestores are commonly used in digital special effects systems.

Framestores are typically configured to input a frame of video from one part of a system and output the frame to another part of the system. When a new frame of video is inputted to the framestore, the previous frame is completely overwritten.

A frame of video is actually composed of two interlaced fields of video. A frame of video contains a certain number of horizontal lines of video information (for example, 525 lines in the NTSC system used in the United States). Each field is composed of every other line, the lines being interlaced to form a frame of video data. A frame of video is recorded by first recording one of the fields and successively recording the other field. A typical time period between the recording of successive fields is one-sixtieth of a second (in the NTSC system). If there is significant movement in the images of the video signal, there will be an annoying flicker when two fields are viewed as a video still frame. This can be a problem when such fields are combined in a framestore. One method to solve this problem is to use a process called alternate field interpolation. Alternate field interpolation uses only one field of video from each frame and interpolates the second field from the first field. Because the second field is based entirely on the first field, there is no movement between fields in a frame. The disadvantage of this method is that one half of the video information is being thrown away. When there is little or no movement between fields, the entire frame should be used. Therefore, there is a need to prevent flicker when there is movement between the two fields of a frame of video by using the entire original frame.

It would be advantageous if the output of a framestore could be recirculated back through the framestore with the addition of new input frames. This would allow the combining of many frames of video to form an output signal. A number of special effects can be created by this recirculation, including blurs, smears, and trails, all highly desirable special effects. Such recirculation requires the ability to combine video signals. This ability to combine video signals requires the ability to manipulate video signals and associated key signals. Such a framestore would require key signal processing, storage and recirculating capability.

### SUMMARY OF THE INVENTION

The present invention fulfils a need for providing a variety of special effects by means of a recirculating frame store using a variety of decaying methods. Additionally, the present invention provides for a selective method of preventing flicker between successive fields of video. The present invention further provides for the operation of a recirculating framestore as part of a video concentrator.

The present invention provides in its main aspect a solution to the inter-field flicker problem by modification of alternate field interpolation. In ordinary alternate field interpolation as shown in, for example, US-A-4233631, only one of each pair of fields is actually used. The present invention actually splits the framestore and its video and key recirculation paths into two channels, one for each field of video. These two channels are completely recirculated during the period each field is received, instead of being recirculated once during the period a full frame is received.

Thus when the first field is being processed, an interpolated second field is being processed at the same time. Normally one field is processed at a time. This processing at the field rate maintains the resolution of a non-interpolated signal, while eliminating inter-field frame flicker.

An ideal location for such a recirculating framestore is as part of a video concentrator. By its nature, the recirculating framestore must have access to key as well as video signals. In a video concentrator, all the needed signals are available. Further, the effectiveness of the special effects is enhanced by a number of possible input images, including multiple-image images that can be created by the concentrator. The concentrator also allows the output of the recirculating frame store to be combined with other signals being outputted.

### BRIEF DESCRIPTION OF THE DRAWINGS

Figure 1 is a schematic representation of components of a concentrator utilizing a recirculating special effects framestore in accordance with this invention.

Figure 2 is a schematic representation of a recirculating special effects framestore in accordance with the present invention.

Figure 3 is a schematic representation of a key processor in accordance with the present invention.

Figure 4 is a representation of an output frame of video of a recirculating special effects framestore view on a video monitor.

Figure 5 is a schematic representation of a random signal generator in accordance with this invention.

### DETAILED DESCRIPTION

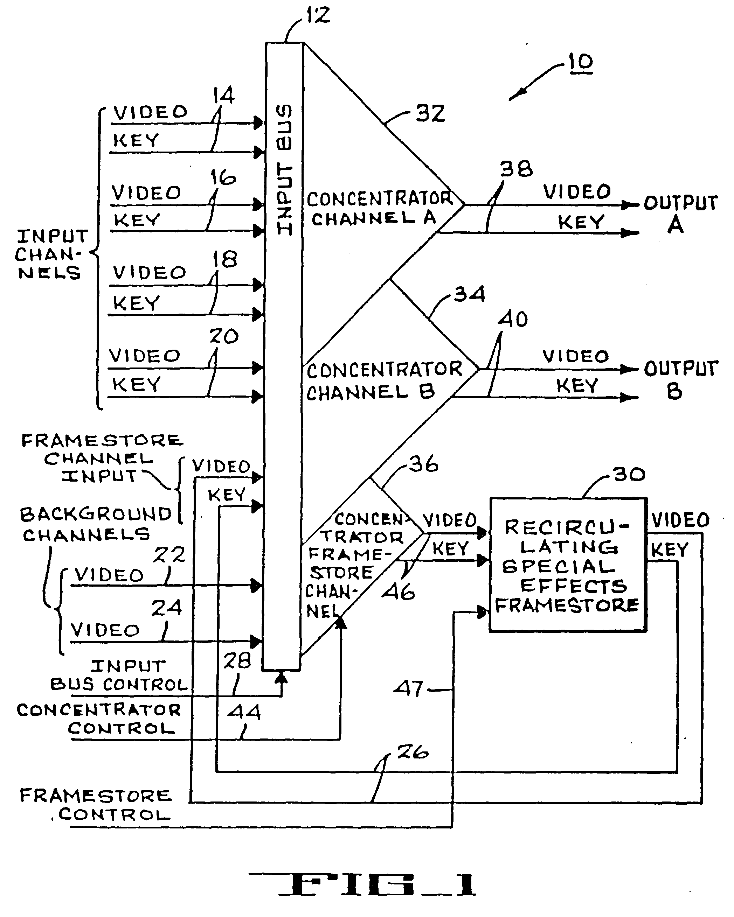

Figure 1 is an illustration of a typical video concentrator 10. An input bus 12 receives the various input signals and routes them to other parts of the concentrator according to an input bus control signal 28. Input channels 14, 16, 18 and 20 each input both a video signal and a respective key signal. The video signal is an unkeyed video signal, which is a video signal that has not been processed by its corresponding key signal. The key signal accompanies the video signal as an indicator of the processing to be performed within the concentrator. The source of these input channels may be a number of video devices, such as switchers or digital special effects system. While four input signal pairs are shown, it is understood that any number of input channels would be allowable.

There are preferably two background channels 22 and 24. These channels are "video signal only" inputs that usually provide a color background, although any video signal can be used. Background channels 22 and 24 are used to fill in the areas of the output frame that do not contain keyed video signals. In areas where the linear key is greater than zero but less than one, the background is added to make the total key signal value effectively equal to one. As with the input channels, any number of background channels are allowable.

The other input signal on input bus 12 is a framestore channel input 26. Framestore channel input 26 contains both a keyed video signal and an associated key signal, indicative of the key processing already performed on the video signal. Framestore channel input 26 is the output of a recirculating special effects framestore 30.

Input bus 12 routes the various signals to three concentrator channels 32, 34 and 36. The input bus control signal 28 determines which signals are passed to which channel. Control signal 28 is derived from operator inputs at a control panel.

The three concentrator channels 32, 34, 36 receive input signals from input bus 12 according to control signal 28. Concentrator channel 32 (shown as concentrator channel A) and concentrator channel 34 (shown as concentrator channel B) are preferably identical channels. Both channels A and B can accept any combination of signals from input channels 14, 16, 18 and 20, or framestore channel 26, and combine them according to concentrator control signals 44. Background channels 22 and 24 can be routed to only concentrator channels 32 and 34. Because the output of the framestore 30 must be outputted through one of the other concentrator channels, there is an opportunity to add a background signal at that stage.

The output of concentrator channels A and B are output signals 38 and 40. Output signals 38 and 40 both have a video signal and a key signal. Once again, the key signal is indicative of the previous key processing. The output of concentrator framestore channel 36 is a concentrator framestore channel output channel 46, which contains both a video and key signal inputted to the recirculating special effects framestore 30.

In operation, signals are selected from the input bus 12 and are fed to each of the concentrator channels 32, 34 and 36. As an example, concentrator channel 32 receives signals from two input channels, 14 and 16 and a background channel 22. The concentrator control signals 44 dictate that input channel 14 should have priority over input channel 16. The video signals of input channel 16 and 16 are processed and combined accordingly, and then keyed into background channel signal 22 to form a channel A output signal 38.

Continuing the above example, signals from input channels 18 and 20 are fed into concentrator framestore channel 36. Signals from input channels 18 and 20 are combined and outputted to the recirculating framestore 30. In framestore 30, new images are combined with old recirculated images according to a framestore control signal 47 and outputted to frame store channel input 26 as a video and key signals. Framestore channel input 26 is fed to the input bus 12, and in turn is fed by the input bus 12 to the concentrator channel B. Background channel 22 is also fed to the concentrator channel B, where it is added as background to the framestore channel input 26. The result is outputted as channel B output signals 40. These signals can then be fed to any video utilization device, such as a monitor, video tape recorder, or broadcast system.

In the above example, the routing of signals was arbitrarily chosen to illustrate a typical operation of the concentrator. The operator has complete control over a large number of potential routings of signals.

Next, the operation of the recirculating framestore 30 will be discussed. While the framestore 30 is preferably located within a video concentrator, it is clear that it could operate with numerous video systems and as a self contained system.

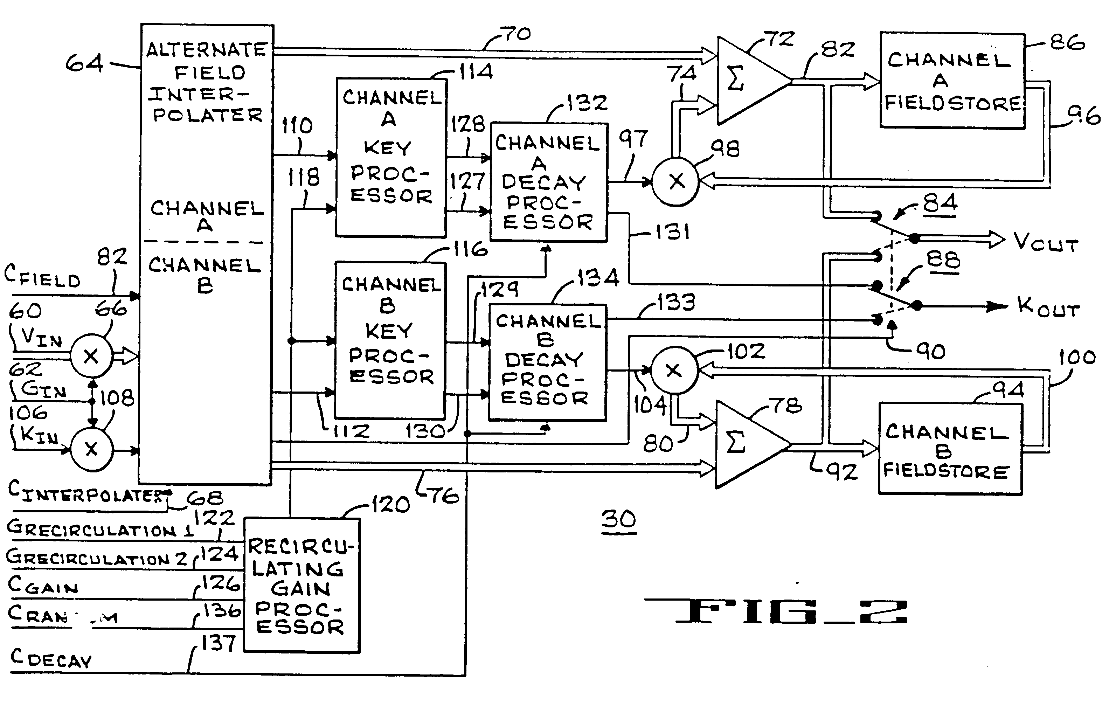

The recirculating framestore 30 is shown in Figure 2. There are three types of signals which are routed about the recirculating framestore 30. They are video signals, which are shown as double bus lines, key signals, and control signals. If this system is digital, which is the preferred embodiment, the video and key signals are binary signals.

Both video and key signals are recirculated. The video follows a relatively simple recirculation path and will be discussed first. Input video signal 60 can originate from a variety of video devices. If the framestore 30 is part of the concentrator 10 of Figure 1, then input video signal 60 will originate in concentrator framestore channel 36 as the output signal 46.

Input video signal 60 is fed to a video gain processor 66 where it is processed with an input gain signal 62. Input gain signals are numbers between zero and one, and input gain signal 62 specifies the amount of gain reduction to be imposed on input video signal 60. Input gain signal 62 preferably is generated by a control system from an operator's input. Video gain amplifier 66 can be implemented as a simple digital multiplier available as an integrated circuit package.

The output of video gain processor 66 is fed into an alternate field interpolator 64. Interpolator 64 operates in two modes. The first mode is used where there is little or no movement between fields of video. In this mode no interpolation takes place. The second mode is used when there is movement between the fields of video. The operating mode is determined by an interpolator control signal 68. This signal preferably is generated by the control system from operator input. When the operator notices a flicker in the output signal displayed on a video monitor, the operator sets this signal to the second mode.

If automatic generation of the interpolator control signal 68 is desired, input video signal 60 can be monitored by a motion detector in a well known manner. Such a motion detector will set the interpolation control signal 68 to the second mode whenever motion greater than a selected threshold amount is detected.

Interpolator 64 has two channels, A and B. Channel A receives video field "one", and channel B receives video field "two". Channel A outputs an input channel A video signal 70 to a channel A video combiner 72, where it is combined with a recirculating channel A video signal 74. Channel B outputs an input channel B video signal 76 to a channel B video combiner 78, where it is combined with a recirculating channel A video signal 80.

If interpolator 64 is operating in a first mode, corresponding to a condition of no movement or flicker, then interpolator 64 acts as a routing device. According to a field control signal 82, the input video signal from video gain processor 66, is fed to either channel A or B for output as either input channel A video signal 70 or input channel B video signal 76. Field control signal 82 is generated by the control system and indicates whether the current field being received is the first or second field of the video frame.

If interpolator 64 is operating in the second mode, alternate field interpolation is occurring. When field control signal 82 indicates that the first field is being inputted, the input video signal is outputted directly on channel A as input channel A video signal 70. From the first field video signal, a second field video signal is interpolated and outputted by channel B as input channel B video signal 76. The process of alternate field interpolation is well known to those skilled in the art. When field control signal 82 indicates that the second field is being inputted, the input video signal is outputted directly on channel B as input channel B video signal 76. From the second field video signal, a second field video signal is interpolated and output by channel A as input channel A video signal 70.

Input channel A video signal 70 is combined with recirculating channel A video signal by channel A video combiner 72. In the preferred embodiment, video combiner 72 is implemented as a digital adder, which is available as an integrated circuit. Channel A video combiner 72 outputs an output channel A video signal 82. Output channel A video signal 82 is fed to both output video switch 84 and channel A fieldstore 86.

Output video switch 84 is operated in tandem with output key switch 88. Both switches are operated by output field select signal 90. Output field select signal 90 is generated by interpolator 64 based upon field control signal 82. The switch positions are alternated for every field of video to form a standard video signal. The output of video switch 84 is the output of framestore 30. If the framestore 30 is located in the concentrator 10 of Figure 1, the output video signal is part of the framestore input channel 26.

Input channel B video signal 76 is combined with recirculating channel B video signal by channel B video combiner 78. Video combiner 78 is the same as channel A video combiner 72. Channel B video combiner 78 outputs an output channel B video signal 92. Output channel B video signal 94 is fed to both output video switch 84 and a channel B fieldstore 92.

Output channel A video signal 82 is also fed into the channel A fieldstore. Video signals are constantly being read in and out of fieldstore 86. Each pixel of video data remains in the fieldstore for the time duration of one field of video. Fieldstore 86 outputs recirculating channel A video signal 96, which is fed to video gain processor 98. Video gain processor 98 is the same as the input video gain processor 66. Recirculating channel A video signal 96 is processed with a channel A key signal 97. The derivation of this key signal will be discussed below. The output of channel A gain processor is fed into channel A video combiner 72 and combined with video signal 70 to produce video signal 82 which is recirculated back through the fieldstore 86.

The channel B video recirculation path is identical to that of channel A. Output channel B video signal 92 is also fed into the channel B fieldstore. Fieldstore 94 outputs recirculating channel B video signal 100, which is fed to video gain processor 102. Video gain processor 102 is the same as video gain processors 66 and 98. Recirculating channel B video signal 100 is processed with a channel B key signal 104. The derivation of this key signal will be discussed below. The output of channel B gain processor is fed into channel B video combiner 78 and combined with video signal 76 to produce video signal 92 which is recirculated back through the fieldstore 94. This completes the input and recirculation paths for the video signals in recirculating framestore 30.

The path of the key signals will be discussed next. Input key signal 106 indicates the previous processing of input video signal 60. Because input video signal 60 is directly processed with input gain signal 62, input key signal 106 is also processed with that signal so that it will remain indicative of the processing of input video signal 60. Input key signal 106 is processed by input key processor 108. Input key processor can be implemented as a digital multiplier. The output of input key processor 108 is fed into interpolator 64.

Interpolator 64 does process the input key signal 106 in the same manner that the input video signal 60 is processed. Key signals that correspond to the first field are routed to channel A and outputted as input channel A key signal 110. Key signals that correspond to the second field are routed to channel B and outputted as input channel B key signal 112. Input channel A and B key video signals, 110 and 112, are fed to channel A and B key processors, 114 and 116 respectively.

Each of the channel A and B key processors, 114 and 116, actually is a combination of a key processor, key loop, and key store. Another input to key processor 114 and 116 is recirculation gain 118. The derivation of recirculation gain 118 will be discussed below. In the key processor 114 and 116, recirculation gain 118 is used to process an internal recirculating key signal.

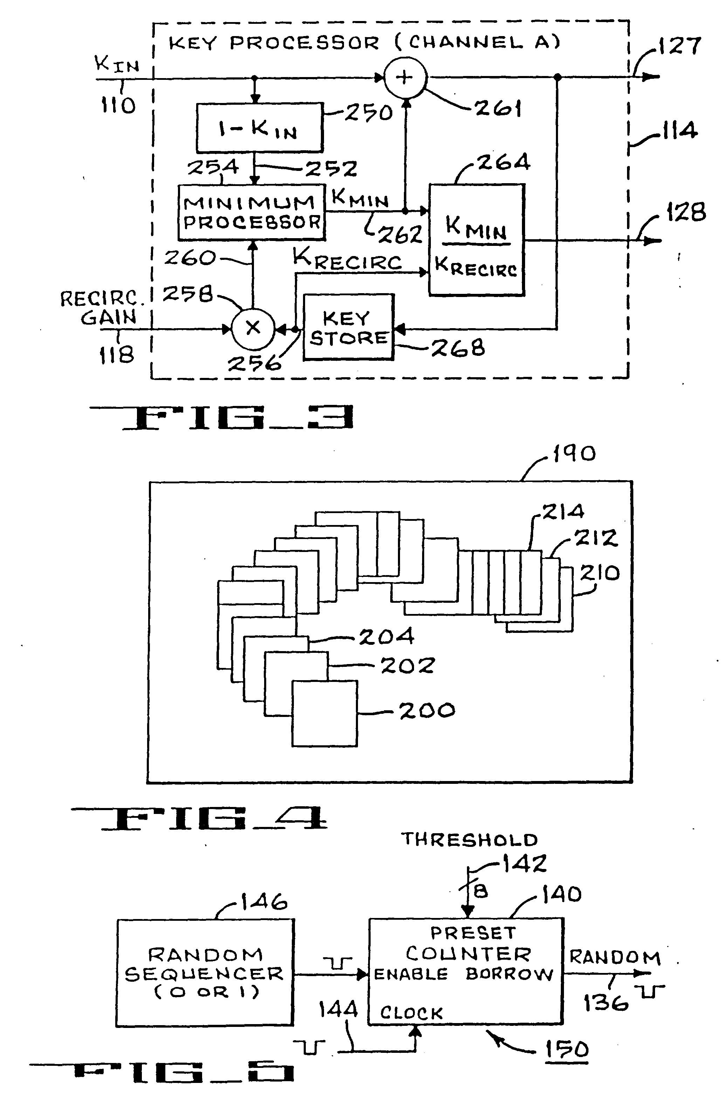

The channel A key processor 114 is shown in Figure 3. It will be understood that the channel B key processor 116 is identical. Inside the key processor 114, the input key signal 110 is subtracted from unity by the 1-K_{IN} processor 250 to form a remainder key signal 252. The remainder key signal 252 represents the amount of key signal not used by the input video signal 70 of Figure 2. The 1-K_{IN} processor 250 can be implemented, for example, as an inverter and digital adder. The output of the 1-K_{IN} processor 250 is fed to a minimum processor 254.

A recirculation key signal 256 represents the key signal used by the video currently in the channel A field store 86 of Figure 2. The recirculation key signal 256 is processed with the recirculation gain signal 118 by key signal processor 258. Key signal processor 258 is identical to key signal processor 108. The resulting signal is the processed recirculation key signal 260, which is fed to minimum processor 254 with remainder key signal 252.

Minimum processor 254 determines the minimum of the key signal input thereto and outputs the signal as minimum key signal K_{MIN} on line 262. Minimum processor 254 can be implemented as a digital comparator. The output of minimum processor is fed to both key signal adder 266 and ratio processor 264.

Ratio processor 264 determines the ratio of the minimum key signal K_{MIN} to the recirculation key signal K_{RECIRC} 260, to form the recirculating channel A key signal 128. Ratio processor 264 can be implemented as an arithmetic processor integrated circuit, but is preferably implemented as a look-up table in a ROM memory.

The key processor 114 also outputs the sum of the minimum key signal 262 and the input key signal K_{IN} 110, as the recirculating channel A output key signal 127.

The output key signal 127 is also fed to an internal key store 268, from which it is outputted as the recirculation key signal 256. Key store is simply a memory array of the same number of pixel locations as the channel A field store 86.

Referring again to Figure 2, key processor 114 is designed to allow input video 70 to use as much of the available signal gain as it needs. It is said to have priority over the recirculating video 96. All of the remaining gain is available to the recirculating video 96. If necessary, the recirculating video 96 is processed down to the level of the remaining key space. If the recirculating video 96 can use all the remaining gain, then the output key signal 127 is unity. However, if the recirculating video 96 has already been reduced, or will be reduced by the recirculation gain signal 118 to a level less than the remaining gain, then recirculating channel A key signal 128 will be at that level and the output key signal 127 will represent the total of the input key signal 110 and the minimum key signal 262 (Figure 3), which will be less than unity. Video signals that have been reduced in gain have lost information because these signals exist in only limited resolution. Thus when they are reduced, they lose resolution and if increased in gain, they will not reproduce their original values. Thus video signals preferably are only reduced in gain, and not generally increased.

The recirculating channel A and B key signals 128 and 130 are fed to channel A and B decay processors, 132 and 134, whose function will be explained below. If not activated, decay processors 132 and 134 pass their input signal unaffected. Thus recirculating channel A and B key signals are outputted as channel A and B key signals 97 and 104.

The channel A and B output key signals are also fed to channel A and B decay processors 132 and 134 and, if decay processors 132 and 134 are not activated, pass unaffected as channel A and B key output signals, 131 and 133. The channel A and B key output signals 131 and 133, are fed to key switch 88. Key switch 88 is operated in tandem with video switch 84. The output of key switch 88 is located in the concentrator 10 of Figure 1, the output key signal is part of the framestore input channel 26.

The recirculation gain signal 118, used by both key processors, is generated by recirculating gain processor 120. Recirculating gain processor 120 operates in two modes. These modes are selected by gain control signal 126, which is generated by the control system, preferably from operator input. In the first mode, recirculating gain processor 120 outputs recirculating gain 1, 122, and outputs it as recirculation gain signal 118. This is considered the normal operating mode.

In the second mode, recirculating gain processor 120 receives a random control signal 136. This two state signal is generated by a random signal geneator 150 of Figure 5, to be discussed below. The random control signal 136 selects either recirculation gain 1, 122, or recirculation gain 2, 124, as recirculation gain signal 118.

Decay processors 132 and 134, when activated, output key signals having a value of one regardless of their input signals, unless their input key signals are under a low threshold level, when they output signals of zero. The purpose of this processing will be discussed below.

This completes the discussion of the interconnection of the elements of Figure 2. Next, the operation of Figure 2 will be explained.

The operation of recirculating framestore 30 is best understood within a typical example. The goal of this example is to create a special effect called a trail. A trail is illustrated in Figure 4. Figure 4 is a representation of a video signal viewed on a video monitor. A size reduced frame 200 is moved from a starting location 210 to a final location 200. As it moves along the path, it leaves old reduced frames such as 210, 212, 214, 204 and 202.

In this example, the input video 60 (Figure 2) comprises a size reduced frame of video in an otherwise empty full frame 190. Such a video signal can be created by a digital special effects system which is capable of reducing a video signal and positioning it within a full frame of video. If reduced frame 210 were not partially obscured by reduced frame 212, and reduced frame 210 were the only reduced frame in full frame 190, then Figure 4 would be a representation of input video signal 60. It should be assumed that frame 210 contains a video picture, such as a field of flowers or a news anchorman reading the news. Over a period of time, the frame of active video is moved in relation to the full frame of video. Frame 210 follows the path shown by the other boxes in the full frame on the video monitor. Unlike Figure 4, which actually represents the desired trail effect to be created by the recirculating framestore 30, input video 60 does not leave a trail, but rather only one frame is visible at any one time. The moving frame starts at the location of frame 210, and follows the path shown and stops at the location of frame 200.

Input key signal 106 (Figure 2) is created with input video signal 60 and has a value of one where it corresponds to the reduced frame 200 and a value of zero elsewhere. In this example, both the input gain signal 62 and recirculating gain signal 118 are set at unity. However, the effects of changing these signals will be discussed below. For this example, it is also assumed that fieldstores 86 and 94 start empty.

Framestores are commonly said to recirculate at frame rate. This means that the contents of the framestore, one frame (two fields) of video, recirculates once in the time it takes a new frame to be inputted. Because framestore 30 is actually composed of two field stores and recirculation paths, framestore 30 can be recirculated at field rate. This means that the contents of the framestore 30 are completely recirculated in the time it takes to input a new field. It is this doubled rate that allows every-field interpolation by the interpolator 64. Operation of interpolator 64 on the luminance and chrominance components of the input video signal 60 is described in two sections of an Ampex Manual by David Trytko, one of the present inventors, entitled "ADO Infinity - Target Framestore System - System Theory and Operation".

The input video signal 60 and input key signal 106 pass unaffected by processors 66 and 108, because the input gain signal 62, in this example, is set to one. If interpolator 64 is off, the first field of video and key are sent to channel A. Nothing is sent to channel B. Anything recirculating in channel B is allowed to recirculate without additional material. The second field of video and key are sent to channel B and nothing is sent to channel A.

If interpolator 64 is on, then as field "one" of video and an associated key signal are routed to channel A and an interpolated second field of video and an associated key signal are sent out on channel B. When the real second field is encountered, it is sent out on channel B and an interpolated first field of video and its key signal are sent out on channel A. This alternating interpolation allows the fieldstores to be updated with new material every field, instead of every frame, producing improved picture quality in the resulting video image.

The common method of alternate field interpolation in prior art devices would be to receive the first field and video and pass them on channel A and send nothing on channel B. Upon receiving the second field, the second field is discarded and a new second field of video and key is interpolated from the first field and sent out on channel B. Nothing is sent out on channel A. When the interpolator is off, the field stores are only updated with new material every frame. This preserves the full resolution of the original frame of video. Under the common method of interpolation, one of the fields in a frame is discarded in favor of an interpolated field so as to eliminate inter-field flicker. Interpolator 64 uses both fields in the frame to interpolate, and reduce or eliminate flicker. By using both fields and updated on field basis, there is no loss of resolution as compared to the more common method of alternated field interpolation.

The channel A input video signal 70, after leaving interpolator 64, is combined with the channel A recirculating video 74. Before being combined with the cahnnel A input video, recirculating video 74 must be processed with the output of the key processor 114. For this first frame of video, the fieldstore 86 was defined as being empty. Thus the output of the framestore 30 is the input video signal. The input video signal 70 is stored in fieldstore 86 and the input key signal 110 is stored in key store 268 (Figure 3). The second field of video and key is processed in the same manner.

For the sake of this example, it will be assumed that the second frame of input video contains the size reduced frame of video now moved from position 210 in Figure 4 to position 212. The input video signal 70 is passed normally to video combiner 72. The input key signal 110 is also passed to key processor 114.

Referring to Figure 3, the input key signal 110 defines the area of reduced frame 212 in Figure 4. The key signal 110 is subtracted from unity to form the remainder key signal 252, which indicates what key signal space is available to the recirculating video. Key store 268 contains the key signal from the first frame, which defines the area of reduced frame 210 in Figure 4. Because the recirculation gain 118 is defined as unity for this example, the minimum processor 254 determines the minimum between the recirculating key signal and one minus the input key signal. There are three areas of interest in this determination.

First is the area outside both reduced frames 210 and 212 of Figure 4. In that area of the key signal the minimum value K_{MIN} is zero because the recirculating key signal 260 is zero and the key signal on line 252 (1-K_{IN}) is unity.

The next area of interest the key signal is the area of the second reduced frame 212 (Figure 4). Note that this frame partially obscures the first frame 210. This frame is part of the input key signal, and it has priority over any image being recirculated. It should be noted that key processor 114 could easily be designed such that recirculated key signal would have priority over input key signals. In the area defined by the input key signal for the second frame, the minimum processor 254 outputs zero on the line 252. The third area is the area of the first reduced frame that is not obscured by the reduced frame 212 (Figure 4) in the second input frame. This can be seen as the backward "L" shaped area labelled 210 in Figure 4. Both input signals to minimum processor 254 have this area of the key signal at one. Thus the minimum key signal 262 only defines this backward "L" shaped area.

The minimum key signal 262 is added to the input key signal to form the output key signal 131 and the recirculation key signal to be stored in the key store 268. This key signal indicates area of interest in the output key signal is the combined area of the first and second input key signals defining the two overlapping reduced frames of video, 210 and 212.

The ratio of the minimum key 262 and the recirculating key 260 is the minimum key 262, which becomes the channel A key signal 97. The ratio is used to determine how to process the recirculating video signal to a desired level while taking into account the previous processing of that video signal. The channel A key signal 97 is used to process the recirculating video 96. Recirculating video 96 contains the reduced frame 210 (Figure 4) from the first output frame. After being processed by the channel A key signal 97, the recirculating video signal is no longer the full reduced frame 210 (Figure 4) but rather an "L" shaped area of video. When added to the input video signal 70, an output video signal 82 is formed which is a video signal in the shape of two overlapping reduced frames, 210 and 212. This video signal is also sent to the fieldstore 86, to be used as the recirculated video signal for the next input frame.

The above discussion has been restricted to channel A for the sake of clarity. It is clear that it applies equally to channel B and the second fields.

Referring to Figure 4, frame 210 is referred to as a trail. As frames are added, the same process occurs until the end of the motion with frame 200 as the final frame. Each new frame would obscure a portion of the previous frame, yielding a full frame 190 as shown in Figure 4. The trail is a basic special effect of the recirculating framestore 30. Other special effects may be described as variations on the trail effect. The following will discuss the effects of changing the control signals.

Changing the input gain signal 62 to a value less than one causes the new frames to have a transparent appearance. If the frame is not moved, then a number of input frames must be to added on top of each other to form a frame of full intensity. Because even an apparently still picture contains a slight amount of movement of the originating camera, the image becomes blurred wherever movement occurs producing a desirable special effect. If the frame is moving, then the image smears, which is also considered a desirable effect. If the input gain signal 62 were set to zero, no new video would be added to the recirculation path. If the recirculation gain 118 was set to one at the same time a freeze effect would be created.

Changing the recirculation gain causes a decaying of old images. Each old image would become more transparent until it finally disappeared. The more times a particular image is recirculated the more its key signal is reduced. If the added images are moved while being added, a very pleasing trail that resembles the tail of a comet, is created.

There are two other systems within the recirculating framestore 30 to create special effects. The first is the decay processors and the second is the recirculating gain processor.

The special effect created by the decay processors 132 and 134 uses the recirculating key signal, 250 (Figure 4), in key processors, 114 and 116, as a collection of down counters. The recirculating key signal is decayed normally by the recirculating gain signal 118, but the recirculating key signals are not allowed to produce corresponding decay of the recirculating video signals, 96 and 100, or output key signals, 127 and 129. The recirculating video signals 96 and 100 are processed with a gain of one and the output key signal is outputted at one. This effect, referring to Figure 4, allows the old frame images to remain at full intensity each old frame image instantaneously disappears in the order they were added as their key values go below a lower threshold value. The effect looks something like the movement of a centipede.

To accomplish this effect, decay processors 132 and 134, when activated, output a key signal of one, regardless of their input, unless their input is below the low threshold, when they output zero. The low threshold value is necessary because the key signal will never actually reach zero as it is always multiplied by an amount which only reduces its value.

The other effect system is the recirculating gain processor 120. Recirculating gain processor 120 is activated by gain control signal 126. Unless activated, recirculating gain processor 120 passes recirculating gain signal unchanged. When activated, it passes either recirculating gain "one", 122, or "two", 124, depending on the state of random control signal 136. Both recirculating gains "one" and "two" are generated by the control system from an operator's input. For a maximum effect, these two values should be relatively different in value, although they could be set to any values. The effect created by this two-rate decay is a twinkling of the trail, similar to the twinkling of stars at night.

While a random control signal can be created in a variety of ways, the preferred method is shown in Figure 5. The control random signal 136 is the carry signal of up counter 140. The frequency of the control random signal 136 is determined by the preset input 142 of counter 140. The larger the preset, the more frequently the random control signal 136 will be issued. The pulses used to increment the counter are supplied to the clock input 144 of the counter. The frequency of the clock pulses should be at the rate of digital sampling of the system, that is the rate the pixels move through the system. The random factor is created by random sequencer 146, which randomly outputs either zero or unity into the enable counter 140. The effect of this arrangement is that the counter 140 counts down from the preset 142 only when enabled by the random sequencer 146. Counter 140 can be implemented as a simple digital up counter. Random sequencer can be implemented as a white noise generator with a threshold output.

In summary, the recirculating framestore can be adjusted by a variety of control signals and system to create a variety of special effects. When there is movement between consecutive fields of video, the framestore can operate in an interpolation mode the interpolator interpolates every field as opposed to every frame, to reduce or eliminate flicker. The recirculating framestore can operate in many video devices and even as a stand alone device, but is preferably situated in a video concentrator, which acts as a ideal input and output system for the framestore.

## Claims

1. An apparatus for combining sequentially received field A and field B input video signals which together define a frame of video signals with field A and field B recirculated video signals, comprising:
means (64) for receiving a field A input video signal during a field A interval and for simultaneously interpolating from said field A input video signal a field B interpolated video signal, and for receiving a field B input video signal during a field B interval and for simultaneously interpolating from said field B input video signal a field A interpolated video signal;
means (72, 78) for combining, during said field A interval, said field A input video signal and a field A recirculated video signal and for combining, during said field A interval, said field B interpolated video signal with a field B recirculated video signal to generate, respectively, a field A combined video signal and a field B combined video signal, and for combining, during said field B interval, said field B input video signal and a field B recirculated video signal and for combining, during said field B interval, said interpolated field A video signal with a field A recirculated video signal to generate, respectively, a field B combined video signal and a field A combined video signal;
means (86, 94) for separately storing said field A and field B combined video signals and for outputting, after predetermined delays for each of said field A and field B combined video signals, said stored field A and field B combined video signals as said field A recirculated video signal and said field B recirculated video signal respectively; and
means (84) for selecting alternately a field A combined video signal and a field B combined video signal to constitute a frame of an output video signal.

2. Apparatus according to claim 1 and further comprising:
first means (114, 116) for receiving a field A key signal and a field B input key signal corresponding, respectively, to said field A and field B input video signals, said field A and field B input key signals indicating the level of the corresponding field A and field B input video signals, and for receiving field A and field B recirculated key signals indicating the level of said corresponding field A and field B recirculated video signal, and for generating in response thereto a new field A recirculated key signal, a new field B recirculated key signal, a field A recirculated video processing key signal and a field B recirculated video processing key signal;
second means (98, 102) coupled to said first means and responsive to said field A and field B recirculated video processing key signals to process, respectively, corresponding said field A and field B recirculated video signals prior to combination of each said field A and field B recirculated video signal with corresponding field A and field B input video signals; and
third means (268), coupled to said first means, for storing said new field A and field B recirculated key signals for use as said field A and field B recirculated key signals respectively.

3. Apparatus according to claim 1 wherein said field A and field B input video signals and said field A and field B combined video signals and said field A and field B recirculated video signals each comprise a frame of video signals, where each said frame is comprised of a plurality of horizontal scan lines defining a raster, and wherein each said raster is divided into a field A of horizontal scan lines having a first set of locations on said raster and a field B of said horizontal scan lines occupying a second set of locations on said field B of said horizontal scan lines occupying a second set of locations on said raster so as to be interlaced or interdigitated with said field A scan lines, and where each said horizontal scan line is comprised of a plurality of pixels, and each said pixel is defined in picture content by a corresponding data sample, and the apparatus further comprises:
key processing means (114,116) coupled to receive field A and field B streams of digital data samples defining a plurality of field A and field B input key signals, and coupled to receive field A and field B recirculated key signal data streams, for performing predetermined mathematical processsing on each said field A and field B input key signal data sample using a corresponding field A or field B recirculated key signal data sample, said mathematical processing being performed in synchronism with receipt of the corresponding field A or field B input video signal data sample, and for generating a corresponding stream of field A or field B output key signal data samples from said mathematical processing operations, and for generating a corresponding stream of field A or field B recirculated video processing key signal data samples from said mathematical processing operations, wherein each said data sample of said field A and field B recirculated video signals corresponds to a data sample of the corresponding field A or field B recirculated video processing key signal data streams;
recirculated video signal level adjustment means (98,102) coupled to receive said field A and field B recirculated video signal data samples and coupled to receive said field A and field B recirculated video processing key signal data samples, and for adjusting the level of each said data sample of said field A and field B recirculated video signals with the corresponding field A or field B recirculated video processing key signal data sample; and
keystore means (268) coupled to receive field A and field B output key signal data samples and for storing each said data sample for an interval equal to one frame interval and then for outputting each said stored output key data sample as a field A or field B recirculated key signal data sample, as appropriate and in synchronism with the receipt of the corresponding field A or field B input key signal data sample for the corresponding pixel in the next frame.

4. Apparatus according to claim 2 wherein said first means further comprises:
means (250) for performing mathematical processing of the key signals such that the difference between a nominal value and each said input key signal is computed to determine a key space available key signal for each said input key signal;
minimum detection means (254) for receiving said recirculated key signal corresponding to each said input key signal and for receiving the corresponding one of said key space available key signals, and for selecting and outputting the smaller of said key space available key signal or said recirculated key signal as a minimum key signal for each said input key signal;
means (264) for receiving said minimum key signal for each said input key signal and said corresponding recirculated key signal and for calculating a recirculated video processing key corresponding to each said input key signal as a fraction having said minimum key signal as the numerator and said recirculated key signal as the denominator;
means (260) for adding said input key signal to said minimum key signal to generate a recirculated key signal for storage and later recirculation for each said input key signal; and
means (268) for storing said recirculated key signal for an interval equal to one frame of said input video signals and for outputting said stored recirculated key signal as said recirculated key signal simultaneously with the receipt of a new corresponding input key signal for the next frame of said input video signals.

5. Apparatus according to claim 3 or 4 and further comprising means (66, 108) coupled to receive both said streams of field A and field B input video data samples and both said streams of field A and field B input key signal data samples and coupled to receive an input gain control signal, for simultaneously adjusting the values of said input video data samples and said input key signal data samples according to the value of said input gain control signal.

6. Apparatus according to any foregoing claim and further comprising output video switch means (84) coupled to said means for combining for outputting said field A combined video signal during said field A interval and for outputting said field B combined video signal during said field B interval.

7. Apparatus according to claim 3 and claim 6, further comprising output switch means (88) coupled to said means for combining and to said key processing means, for outputting said field A combined video signals during said field A interval and for outputting said field B combined video signal during said field B interval, and for outputting said field A output key signal during said field A interval and for outputting said field B output key signals during said field B interval.

## Patentansprüche

1. Eine Vorrichtung zum Verknüpfen sequentiell empfangener Teilbild-A- und Teilbild-B-Eingangs-Videosignale, die zusammen ein Vollbild aus Videosignalen mit rezirkulierten Teilbild-A- und Teilbild-B-Videosignalen festlegen, aufweisend:
eine Einrichtung (64) zum Empfangen eines Teilbild-A-Eingangs-Videosignals während eines Teilbild-A-Intervalls und zum gleichzeitigen Interpolieren eines interpolierten Teilbild-B-Videosignals aus dem Teilbild-A-Eingangs-Videosignal sowie zum Empfangen eines Teilbild-B-Eingangs-Videosignals während eines Teilbild-B-Intervalls und zum gleichzeitigen Interpolieren eines interpolierten Teilbild-A-Videosignals von dem Teilbild-B-Eingangs-Videosignal;
eine Einrichtung (72, 78) zum Verknüpfen des Teilbild-A-Eingangs-Videosignals und eines rezirkulierten Teilbild-A-Videosignals während des Teilbild-A-Intervalls und zum Verknüpfen des interpolierten Teilbild-B-Videosignals mit einem rezirkulierten Teilbild-B-Videosignal während des Teilbild-A-Intervalls, so daß entsprechend ein verknüpftes Teilbild-A-Videosignal und ein verknüpftes Teilbild-B-Videosignal erzeugt werden und zum Verknüpfen des Teilbild-B-Eingangs-Videosignals und eines rezirkulierten Teilbild-B-Videosignals während des Teilbild-B-Intervalls und zum Verknüpfen des interpolierten Teilbild-A-Videosignals mit einem rezirkulierten Teilbild-A-Videosignal während des Teilbild-B-Intervalls, so daß entsprechend ein verknüpftes Teilbild-B-Videosignal und ein verknüpftes Teilbild-A-Videosignal erzeugt werden;
eine Einrichtung (86, 94) zum getrennten Abspeichern der verknüpften Teilbild-A- und Teilbild-B-Videosignale und zum Ausgeben der gespeicherten verknüpften Teilbild-A- und Teilbild-B-Videosignale als das rezirkulierte Teilbild-A-Videosignal bzw. das rezirkulierte Teilbild-B-Videosignal nach vorbestimmten Verzögerungen für jedes der verknüpften Teilbild-A- und Teilbild-B-Videosignale; und
eine Einrichtung (84)zum abwechselnden Auswählen eines verknüpften Teilbild-A-Videosignals und eines verknüpften Teilbild-B-Videosignals zum Bilden eines Vollbilds eines Ausgangs-Videosignals.

2. Vorrichtung nach Anspruch 1 und ferner ausweisend:
eine erste Einrichtung (114, 116) zum Empfangen eines Teilbild-A-Schlüsselsignals und eines Teilbild-B-Eingangs-Schlüsselsignals, die entsprechend zu dem Teilbild-A- bzw. Teilbild-B-Eingangs-Videosignalen gehören, wobei das Teilbild-A- und das Teilbild-B-Eingangs-Schlüsselsignal den Pegel des zugehörigen Teilbild-A- und Teilbild-B-Eingangs-Videosignals anzeigen, und zum Empfangen rezirkulierter Teilbild-A- und Teilbild-B-Schlüsselsignale, die den Pegel des zugehörigen rezirkulierten Teilbild-A- und Teilbild-B-Videosignals anzeigen und zum Erzeugen eines neuen rezirkulierten Teilbild-A-Schlüsselsignals, eines neuen rezirkulierten Teilbild-B-Schlüsselsignals, eines rezirkulierten Teilbild-A-Videoverarbeitungs-Schlüsselsignals und eines rezirkulierten Teilbild-B-Videoverarbeitungs-Schlüsselsignals in Erwiderung darauf;
eine zweite Einrichtung (98, 102), die mit der ersten Einrichtung gekoppelt ist, und auf das rezirkulierte Teilbild-A- bzw. Teilbild-B-Videoverarbeitungs-Schlüsselsignal anspricht, so daß entsprechend das zugehörige, das rezirkulierte Teilbild-A- und das rezirkulierte Teilbild-B-Videosignal vor der Kombination von jedem, dem rezirkulierten Teilbild-A- und Teilbild-B-Videosignal mit dem zugehörigen Teilbild-A- und Teilbild-B-Eingangs-Videosignalen verarbeitet wird ; und
eine dritte Einrichtung (268), die mit der ersten Einrichtung zum Speichern des neuen rezirkulierten Teilbild-A- und Teilbild-B-Schlüsselsignals für eine Verwendung als das rezirkulierte Teilbild-A- bzw. Teilbild-B-Schlüsselsignal gekoppelt ist.

3. Vorrichtung nach Anspruch 1, wobei das Teilbild-A- und Teilbild-B-Eingangs-Videosignal und das verknüpfte Teilbild-A- und Teilbild-B-Videosignal und das rezirkulierte Teilbild-A- und Teilbild-B-Videosignal jeweils ein Vollbild von Videosignalen aufweisen, wobei jedes der Vollbilder aus einer Vielzahl horizontaler Abtastzeilen besteht, die ein Raster definieren, und wobei jedes der Raster in ein Teilbild-A aus horizontalen Abtastzeilen mit einem ersten Satz von Stellen auf dem Raster und ein Teilbild B aus horizontalen Abtastzeilen aufgeteilt ist, die einen zweiten Satz von Stellen auf dem Teilbild B der horizontalen Abtastzeilen einnehmen, die einen zweiten Satz von Stellen auf dem Raster einnehmen, so daß sie bezüglich der Teilbild-A-Abtastzeilen gespreizt oder interdigitiert werden, und wobei jede der horizontalen Abtastzeilen aus einer Vielzahl von Bildpunkten besteht und jeder der Bildpunkte bezüglich des Bildgehaltes durch einen entsprechenden Datenabtastwert bestimmt wird und die Vorrichtung ferner aufweist:
eine Schlüsselverarbeitungseinrichtung (114, 116), die so gekoppelt ist, daß Teilbild-A- und Teilbild-B-Ströme digitaler Datenabtastwerte eine Vielzahl der Teilbild-A-und Teilbild-B-Eingangs-Schlüsselsignale festlegen, und die so gekoppelt ist, daß rezirkulierte Teilbild-A- und Teilbild-B-Schlüsselsignal-Datenströme zum Durchführen einer vorbestimmten mathematischen Verarbeitung von jedem der Teilbild-A- und Teilbild-B-Eingangs-Schlüsselsignal-Datenabtastwerte unter Verwendung eines zugehörigen rezirkulierten Teilbild-A- oder Teilbild-B-Schlüsselsignal-Datenabtastwertes empfangen werden, wobei die mathematische Verarbeitung synchron zum Empfang des zugehörigen Teilbild-A- oder Teilbild-B-Eingangs-Videosignal-Datenabtastwertes durchgeführt wird, und zum Erzeugen eines zugehörigen Stroms aus Teilbild-A- oder Teilbild-B-Ausgangs-Schlüsselsignal-Datenabtastwerten aus den mathematischen Verarbeitungsoperationen und zum Erzeugen eines zugehörigen Stroms aus rezirkulierten Teilbild-A- oder Teilbild-B-Videoverarbeitungs-Schlüsselsignal-Datenabtastwerten aus den mathematischen Verarbeitungsoperationen, wobei jeder der Datenabtastwerte des rezirkulierten Teilbild-A- und Teilbild-B-Videosignals zu einem Datenabtastwert des zugehörigen rezirkulierten Teilbild-A- oder Teilbild-B-Videoverarbeitungs-Schlüsselsignal-Datenstroms gehört;
eine Einstelleinrichtung (98, 102) für einen rezirkulierten Videosignalpegel, die so gekoppelt ist, daß die rezirkulierten Teilbild-A- und Teilbild-B-Videosignal-Datenabtastwerte empfangen werden, und so gekoppelt ist, daß die rezirkulierten Teilbild-A- und Teilbild-B-Videoverarbeitungs-Schlüsselsignal-Datenabtastwerte empfangen werden, und zum Einstellen des Pegels jedes der Datenabtastwerte des rezirkulierten Teilbild-A- und Teilbild-B-Videosignals mit dem zugehörigen rezirkulierten Teilbild-A- oder Teilbild-B-Videoverarbeitungs-Schlüsselsignal-Datenabtastwert dient; und
eine Schlüsselspeichereinrichtung (268) die so gekoppelt ist, daß Teilbild-A- und Teilbild-B-Ausgangs-Schlüsselsignal-Datenabtastwerte empfangen werden, und die zum Abspeichern jedes der Datenabtastwerte für eine Zeitdauer gleich einem Vollbildintervall und dann zum Ausgeben jedes der gespeicherten Ausgangs-Schlüssel-Datenabtastwerte als ein rezirkuliertes Teilbild-A- oder Teilbild-B-Schlüsselsignal-Datenabtastwert dient, soweit es geeignet und synchron zu dem Empfang des zugehörigen Teilbild-A- oder Teilbild-B-Eingangs-Schlüsselsignal-Datenabtastwertes für den zugehörigen Bildpunkt in dem nächsten Vollbild ist.

4. Vorrichtung nach Anspruch 2 , wobei die erste Einrichtung ferner aufweist:
eine Einrichtung (250) zum Durchführen der mathematischen Verarbeitung der Schlüsselsignale derart, daß die Differenz zwischen einem Nennwert und jedem der Eingangs-Schlüsselsignale zum Bestimmen eines für einen Schlüsselraum verfügbaren Schlüsselsignals berechnet wird,
eine Minimumerfassungseinrichtung (254) zum Empfangen des rezirkulierten Schlüsselsignals, das zu jedem der Eingangs-Schlüsselsignale gehört, und zum Empfangen des zugehörigen der für den Schlüsselraum verfügbaren Schlüsselsignale und zum Auswählen und Ausgeben des kleineren, dem für den Schlüsselraum verfügbaren Schlüsselsignal oder dem rezirkulierten Schlüsselsignal als ein Minimumschlüsselsignal für jedes der Eingangs-Schlüsselsignale;
eine Einrichtung (264) zum Empfangen des Minimumschlüsselsignals für jedes, das Eingangs-Schlüsselsignal und das zugehörige rezirkulierte Schlüsselsignal und zum Berechnen eines rezirkulierten Videoverarbeitungs-Schlüssels, der zu jedem der Eingangs-Schlüsselsignale als ein Bruchteil gehört, das das minimale Schlüsselsignal als den Nenner und das rezirkulierte Schlüsselsignal als den Zähler aufweist;
eine Einrichtung (260) zum Addieren des Eingangs-Schlüsselsignals zu dem Minimumschlüsselsignal zum Erzeugen eines rezirkulierten Schlüsselsignals zum Speichern und zum späteren Rezirkulieren für jedes der Eingangs-Schlüsselsignale; und
eine Einrichtung (268) zum Abspeichern des rezirkulierten Schlüsselsignals für eine Zeitdauer gleich einem Vollbild der Eingangs-Videosignale und zum Ausgeben des abgespeicherten, rezirkulierten Schlüsselsignals als das rezirkulierte Schlüsselsignal gleichzeitig mit dem Empfang eines neuen, zugehörigen Eingangs-Schlüsselsignals für das nächste Vollbild der Eingangs-Videosignale.

5. Vorrichtung nach Anspruch 3 oder 4, und weiterhin aufweisend eine Einrichtung (66, 108), die zum Empfangen von beiden der Ströme der Teilbild-A- und Teilbild-B-Eingangs-Video-Datenabtastwerte und beider der Ströme der Teilbild-A- und Teilbild-B-Eingangs-Schlüsselsignal-Datenabtastwerte gekoppelt ist und zum Empfangen eines Eingangs-Verstärkungsfaktor-Steuersignals gekoppelt ist, und zwar zum gleichzeitigen Einstellen der Werte der Eingangs-Video-Datenabtastwerte und der Eingangs-Schlüsselsignal-Datenabtastwerte entsprechend des Werts des Eingangs-Verstärkungsfaktor-Steuersignals.

6. Vorrichtung nach irgendeinem vorhergehenden Anspruch und ferner aufweisend eine Ausgangs-Video-Schalteinrichtung (84), die mit der Einrichtung zum Verknüpfen für das Ausgeben des verknüpften Teilbild-A-Videosignals während des Teilbild-A-Intervalls und zum Ausgeben des verknüpften Teilbild-B-Videosignals während des Teilbild-B-Intervalls gekoppelt ist.

7. Vorrichtung nach Anspruch 3 und Anspruch 6, ferner aufweisend eine Ausgangsschalteinrichtung (88), die mit der Einrichtung zum Verknüpfen und der Schlüsselverarbeitungseinrichtung gekoppelt ist und zum Ausgeben des verknüpften Teilbild-A-Videosignals während des Teilbild-A-Intervalls und zum Ausgeben des verknüpften Teilbild-B-Videosignals während des Teilbild-B-Intervalls sowie zum Ausgeben des Teilbild-A-Ausgangs-Schlüsselsignals während des Teilbild-A-Intervalls und zum Ausgeben des Teilbild-B-Ausgangs-Schlüsselsignals während des Teilbild-B-Intervalls.

## Revendications

1. Appareil pour combiner de manière séquentielle des signaux vidéo d'entrée reçus de trame A et de trame B qui définissent ensemble une image complète de signaux vidéo avec des signaux vidéo recyclés de trame A et de trame B, comprenant:
un moyen (64) pour recevoir un signal vidéo d'entrée de trame A au cours d'un intervalle de trame A et pour interpoler en même temps à partir dudit signal vidéo d'entrée de trame A un signal vidéo interpolé de trame B, et pour recevoir un signal vidéo d'entrée de trame B au cours d'un intervalle de trame B et pour interpoler en même temps à partir d'un signal vidéo d'entrée de trame B un signal vidéo interpolé de trame A ;
un moyen (72, 78) pour combiner, au cours dudit intervalle de trame A, ledit signal vidéo d'entrée de trame A et un signal vidéo recyclé de trame A et pour combiner, au cours dudit intervalle de trame A, ledit signal vidéo interpolé de trame B avec un signal vidéo recyclé de trame B pour produire, respectivement, un signal vidéo combiné de trame A et un signal vidéo combiné de trame B, et pour combiner, au cours dudit intervalle de trame B, ledit signal vidéo d'entrée de trame B et un signal vidéo recyclé de trame B et pour combiner, au cours dudit intervalle de trame B, ledit signal vidéo interpolé de trame A avec un signal vidéo recyclé de trame A pour produire, respectivement, un signal vidéo combiné de trame B et un signal vidéo combiné de trame A ;
un moyen (86, 94) pour mémoriser séparément lesdits signaux vidéo combinés de trame A et de trame B et pour sortir, après des retards prédéterminés pour chacun desdits signaux vidéo combinés de trame A et de trame B, lesdits signaux vidéo combinés de trame A et de trame B mémorisés en tant que, respectivement, ledit signal vidéo recyclé de trame A et ledit signal vidéo recyclé de trame B ; et
un moyen (84) pour sélectionner de façon alternée un signal vidéo combiné de trame A et un signal vidéo combiné de trame B pour constituer une image complète d'un signal vidéo de sortie.

2. Appareil selon la revendication 1, et comprenant en outre :
un premier moyen (114, 116) pour recevoir un signal de gradation de trame A et un signal de gradation d'entrée de trame B correspondant, respectivement, auxdits signaux vidéo d'entrée de trame A et de trame B, lesdits signaux de gradation d'entrée de trame A et de trame B indiquant le niveau des signaux vidéo d'entrée de trame A et de trame B correspondants, et pour recevoir des signaux de gradation recyclés de trame A et de trame B indiquant le niveau desdits signaux vidéo recyclés de trame A et de trame B correspondants, et pour produire en réponse à cela un nouveau signal de gradation recyclé de trame A, un nouveau signal de gradation recyclé de trame B, un signal de gradation de traitement vidéo recyclé de trame A et un signal de gradation de traitement vidéo recyclé de trame B ;
un deuxième moyen (98, 102) couplé audit premier moyen et sensible auxdits signaux de gradation de traitement vidéo recyclés de trame A et de trame B pour traiter, respectivement, lesdits signaux vidéo recyclés de trame A et de trame B correspondants avant la combinaison de chacun desdits signaux vidéo recyclés de trame A et de trame B avec les signaux vidéo d'entrée de trame A et de trame B correspondants ; et
un troisième moyen (268), couplé audit premier moyen, pour mémoriser lesdits nouveaux signaux de gradation recyclés de trame A et de trame B pour utilisation, respectivement, en tant que lesdits signaux de gradation recyclés de trame A et de trame B.

3. Appareil selon la revendication 1, dans lequel lesdits signaux vidéo d'entrée de trame A et de trame B et lesdits signaux vidéo combinés de trame A et de trame B et lesdits signaux vidéo recyclés de trame A et de trame B constituent chacun une image complète de signaux vidéo, où chacune desdites images complètes est composée de plusieurs lignes de balayage horizontal définissant une grille, et dans lequel chacune desdites grilles est divisée en une trame A de lignes de balayage horizontal comportant un premier ensemble d'emplacements sur ladite grille et une trame B desdites lignes de balayage horizontal occupant un second ensemble d'emplacements sur ladite (trame B desdites lignes de balayage horizontal occupant un second ensemble d'emplacements sur ladite) grille de manière à être entrelacées ou imbriquées avec lesdites lignes de balayage de trame A, et où chacune desdites lignes de balayage horizontal est composée de plusieurs pixels, et chacun desdits pixels est défini en ce qui concerne le contenu d'image par un échantillon de données correspondant, et l'appareil comprenant en outre :
un moyen de traitement de gradation (114, 116) raccordé pour recevoir des flux de trame A et de trame B d'échantillons de données numériques définissant plusieurs signaux de gradation d'entrée de trame A et de trame B, et raccordé pour recevoir des flux de données de signaux de gradation recyclés de trame A et de trame B, pour effectuer un traitement mathématique prédéterminé sur chacun desdits échantillons de données de signaux de gradation d'entrée de trame A et de trame B en utilisant un échantillon de données de signaux de gradation recyclés de trame A ou de trame B correspondant, ledit traitement mathématique étant effectué en synchronisme avec la réception de l'échantillon de données de signaux vidéo d'entrée de trame A ou de trame B correspondant, et pour produire un flux correspondant d'échantillons de données de signaux de gradation de sortie de trame A ou de trame B provenant desdites opérations de traitement mathématique, et pour produire un flux correspondant d'échantillons de données de signaux de gradation de traitement vidéo recyclés de trame A ou de trame B provenant desdites opérations de traitement mathématique ; dans lequel chacun desdits échantillons de données desdits signaux vidéo recyclés de trame A et de trame B correspond à un échantillon de données des flux de donnés de signaux de gradation de traitement vidéo recyclés de trame A ou de trame B correspondants ;
un moyen d'ajustement de niveau de signaux vidéo recyclés (98, 102) raccordé pour recevoir lesdits échantillons de données de signaux vidéo recyclés de trame A et de trame B, et raccordé pour recevoir lesdits échantillons de données de signaux de gradation de traitement vidéo recyclés de trame A et de trame B, et pour ajuster le niveau de chacun desdits échantillons de données desdits signaux vidéo recyclés de trame A et de trame B à l'aide de l'échantillon de données de signaux de gradation de traitement vidéo recyclé de trame A ou de trame B correspondant ; et
un moyen de mémorisation de gradation (268) raccordé pour recevoir des échantillons de données de signaux de gradation de sortie de trame A et de trame B et pour mémoriser chacun desdits échantillons de données pendant un intervalle d'image complète et pour sortir alors chacun desdits échantillons de données de gradation de sortie mémorisés en tant qu'un échantillon de données de signaux de gradation recyclés de trame A ou de trame B, comme il convient et en synchronisme avec la réception de l'échantillon de données de signaux de gradation d'entrée de trame A ou de trame B correspondant pour le pixel correspondant dans l'image complète suivante.

4. Appareil selon la revendication 2, dans lequel ledit premier moyen comprend en outre :
un moyen (250) pour effectuer un traitement mathématique des signaux de gradation de façon telle que la différence entre la valeur nominale et chacun desdits signaux de gradation d'entrée soit calculée pour déterminer un signal de gradation disponible d'espace de gradation pour chacun desdits signaux de gradation d'entrée ;
un moyen de détection de minimum (254) pour recevoir ledit signal de gradation recyclé correspondant à chacun desdits signaux de gradation d'entrée et pour recevoir celui qui lui correspond desdits signaux de gradation disponibles d'espace de gradation, et pour sélectionner et sortir le plus petit dudit signal de gradation disponible d'espace de gradation ou dudit signal de gradation recyclé en tant que signal de gradation minimal pour chacun desdits signaux de gradation d'entrée ;
un moyen (264) pour recevoir ledit signal de gradation minimal pour chacun dudit signal de gradation d'entrée et dudit signal de gradation recyclé correspondant et pour calculer une gradation de traitement vidéo recyclé correspondant à chacun desdits signaux de gradation d'entrée sous la forme d'une fraction ayant comme numérateur ledit signal de gradation minimal et comme dénominateur ledit signal de gradation recyclé ;
un moyen (260) pour additionner ledit signal de gradation d'entrée audit signal de gradation minimal pour produire un signal de gradation recyclé pour mémorisation et recyclage ultérieur pour chacun desdits signaux de gradation d'entrée ; et
un moyen (268) pour mémoriser ledit signal de gradation recyclé pendant un intervalle égal à une image complète desdits signaux vidéo d'entrée et pour sortir ledit signal de gradation recyclé mémorisé en tant que ledit signal de gradation recyclé, en même temps que la réception d'un nouveau signal de gradation d'entrée correspondant pour l'image complète suivante desdits signaux vidéo d'entrée.

5. Appareil selon la revendication 3 ou 4, et comprenant en outre un moyen (66, 108) raccordé pour recevoir à la fois lesdits flux des échantillons de données vidéo d'entrée de trame A et de trame B et à la fois lesdits flux des échantillons de données de signaux de gradation d'entrée de trame A et de trame B ; et raccordé pour recevoir un signal de commande de gain d'entrée, pour ajuster en même temps les valeurs desdits échantillons de données vidéo d'entrée et desdits échantillons de données de signaux de gradation d'entrée en fonction de la valeur dudit signal de commande de gain d'entrée.

6. Appareil selon l'une quelconque des revendications précédentes, et comprenant en outre un moyen de commutation vidéo de sortie (84) couplé audit moyen pour combiner, pour sortir ledit signal vidéo combiné de trame A au cours dudit intervalle de trame A et pour sortir lesdits signaux vidéo combinés de trame B au cours dudit intervalle de trame B.

7. Appareil selon la revendication 3 et la revendication 6, comprenant en outre un moyen de commutation de sortie (88) couplé audit moyen de combinaison et audit moyen de traitement de gradation, pour sortir lesdits signaux vidéo combinés de trame A au cours dudit intervalle de trame A, et pour sortir ledit signal vidéo combiné de trame B au cours dudit intervalle de trame B, et pour sortir lesdits signaux de gradation de sortie de trame A au cours dudit intervalle de trame A et pour sortir lesdits signaux de gradation de sortie de trame B au cours dudit intervalle de trame B.
